# EUROPEAN PATENT SPECIFICATION

(11) **EP 3 745 015 B1**
(45) Date of publication and mention of the grant of the patent: **24.09.2025**
(21) Application number: 19743477.2
(22) Date of filing: 23.01.2019
(51) Int. Cl.: F21S 2/00, B32B 7/023, F21V 3/00, F21Y 115/10

(54) **FILM FOR LED LIGHTING EQUIPMENT, AND LED LIGHTING EQUIPMENT**
FOLIE FÜR EINE LED-BELEUCHTUNGSVORRICHTUNG UND LED-BELEUCHTUNGSVORRICHTUNG
FILM POUR ÉQUIPEMENT D'ÉCLAIRAGE À DEL, ET ÉQUIPEMENT D'ÉCLAIRAGE À DEL

(30) Priority: 26.01.2018 JP 2018011998
(43) Date of publication of application: 02.12.2020
(73) Proprietor: Nitto Denko Corporation, Ibaraki-shi, Osaka 567-8680 (JP)
(72) Inventor: HATTORI Daisuke, Ibaraki-shi, Osaka 567-8680 (JP); NAKAMURA Kozo, Ibaraki-shi, Osaka 567-8680 (JP); KISHI Atsushi, Ibaraki-shi, Osaka 567-8680 (JP)
(74) Representative: Hoffmann Eitle
(86) International application number: PCT/JP2019/002037
(87) International publication number: WO 2019/146628

(56) References cited:
- JP-A- 2011 113 756
- JP-A- 2011 207 751
- JP-A- 2011 207 751
- JP-A- 2014 046 518
- JP-A- 2015 015 185
- JP-A- 2016 040 608
- JP-A- 2017 054 111
- US-A1- 2015 277 011
- US-A1- 2016 097 895
- US-A1- 2016 116 664

## Description

### Technical Field

The present invention relates to an LED lighting apparatus .

### Background Art

As a lighting apparatus excellent in design property, there is known an LED lighting apparatus configured to perform lighting by using an LED as a light source and radiating light via a light guide plate, the lighting apparatus having the LED light source on one end surface of the light guide plate and being configured to emit rod-shaped light from an end surface opposed to the end surface (entrance end surface) on which the LED light source is arranged. In such lighting apparatus, in order to enhance emission efficiency, the light needs to be guided by total reflection at a main surface of the light guide plate, and hitherto, the light guide plate has been configured to be exposed in many cases. However, the light guide plate configured as just described is liable to be fouled with dust, a fingerprint, or the like, resulting in a problem in that the fouling adhering to the light guide plate interferes with the total reflection of light. In addition, when an antifouling layer is arranged on the light guide plate, there arises a problem in that the layer interferes with the total reflection in the guiding of light. In addition, when a film (e.g., a protective film or a design film) is arranged on the main surface of the light guide plate, the guiding of light by the total reflection at the main surface becomes insufficient, resulting in a reduction in emission intensity. US 2016/116664 describes a lighting unit with a LED source and a planar light guide with a low-inderx void-containing layer on its light exit surface.

### Citation List

### Patent Literature

[PTL 1] JP 2017-47677 A

### Summary of Invention

### Technical Problem

An object of the present invention is to provide an LED lighting apparatus according to claim 1.

### Solution to Problem

According to one embodiment of the present invention, there is provided an LED lighting according to claim

According to the invention, the low-refractive index layer is a void-containing layer.

In one embodiment, the low-refractive index layer has a void ratio of 35 vol% or more .

According to the claimed invention, a difference between a refractive index of the light guide plate and a refractive index of the low-refractive index layer is 0.2 or more.

### Advantageous Effects of Invention

The film for an LED lighting apparatus of the present invention includes the low-refractive index layer having a refractive index of 1.25 or less. The use of the film for an LED lighting apparatus can provide: the film for an LED lighting apparatus, which allows the front surface and/or back surface of the light guide unit to have any appropriate film laminated thereon, or to be subjected to any appropriate surface treatment, while suppressing a reduction in waveguide efficiency of light in a lighting apparatus having the LED light source on one end surface of the light guide plate and being configured to emit rod-shaped light from the end surface opposed to the end surface (entrance end surface) on which the LED light source is arranged; and the LED lighting apparatus including the film for an LED lighting apparatus.

### Brief Description of Drawings

FIG. 1 is a schematic cross-sectional view of a film for an LED lighting apparatus.
FIG. 2 is a schematic cross-sectional view of an LED lighting apparatus including the film for an LED lighting apparatus according to one embodiment of the present invention.

### Description of Embodiments

### A. Film for LED Lighting Apparatus

### A-1. Outline of Film for LED Lighting Apparatus

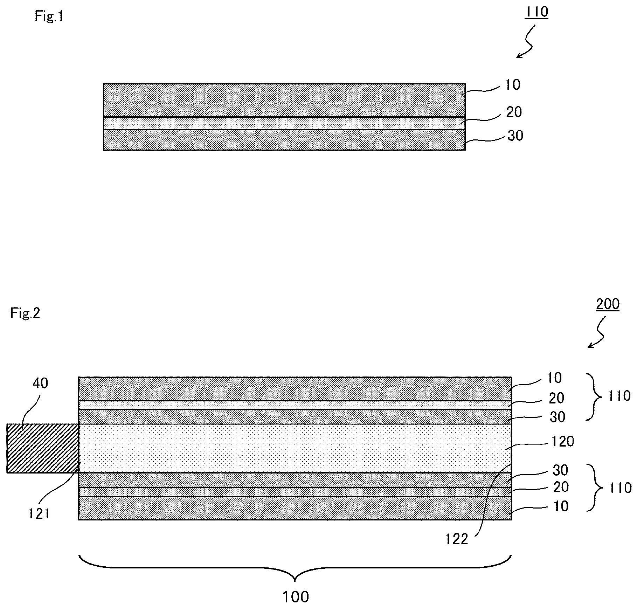

FIG. 1 is a schematic cross-sectional view of a film for an LED lighting apparatus.

A film **110** for an LED lighting apparatus according tc this embodiment includes a base material **10** and a low-refractive index layer **20** arranged on at least one side of the base material **10.** The low-refractive index layer **20** has a refractive index of 1.25 or less. The film **110** for an LED lighting apparatus may further include an adhesion layer **30** on the opposite side of the low-refractive index layer **20** to the base material **10** as required. The film **110** for an LED lighting apparatus is preferably free of any layer other than the adhesion layer **30** on the opposite side of the low-refractive index layer **20** to the base material **10.** The film for an LED lighting apparatus may further include an adhesion layer (not shown) on the opposite side of the base material to the low-refractive index layer as required. In addition, the film for an LED lighting apparatus may have a release liner arranged on the outer side of the adhesion layer for the purpose of protecting its adhesion surface until use. As used herein, the concept "adhesion layer" encompasses a pressure-sensitive adhesive layer and an adhesive layer.

FIG. **2** is a schematic cross-sectional view of an LED lighting apparatus according to an embodiment of the claimed invention. An LED lighting apparatus **200** includes: a light guide unit **100** including a light guide plate **120** and the film **110** for an LED lighting apparatus, which is arranged on at least one surface (both surfaces in the illustrated example) of the light guide plate **120;** and an LED light source **40** arranged on one end surface (surface approximately perpendicular to the film **110** for an LED lighting apparatus) of the light guide plate **120.** The LED lighting apparatus **200** is configured to perform lighting by using an LED as a light source and radiating light via the light guide plate **120.** More specifically, the LED lighting apparatus **200** has the LED light source **40** arranged on one end surface **121** of the light guide plate **120** and is configured to emit light, in a shape corresponding to an end surface shape, from an end surface **122** (hereinafter sometimes referred to as emission end surface) opposed to the end surface **121** (hereinafter sometimes referred to as entrance end surface) on which the LED light source **40** is arranged. A member (not shown) for diffusing emitted light, such as a light-diffusing plate, may be arranged on the emission end surface. In addition, the shape of the emission end surface is not particularly limited, and may be, other than the illustrated example, an inclined surface inclined with respect to the film for an LED lighting apparatus, or an uneven surface. The film **110** for an LED lighting apparatus is preferably directly arranged on the light guide plate **120** in such a manner that the low-refractive index layer **20** is arranged inside (light guide plate side) with respect to the base material **10.** The light guide unit **100** typically has a flat plate shape. In one embodiment, the light guide unit **100** having a flat plate shape may be used with part thereof being curved depending on a desired emission direction of light.

When the film for an LED lighting apparatus of the present invention is used as described above, there can be obtained an LED lighting apparatus capable of satisfactorily reflecting light at an interface between the light guide plate and the film for an LED lighting apparatus, thereby being excellent in waveguide efficiency of light and excellent in intensity of emission from the emission end surface. In addition, light can be satisfactorily reflected at the interface between the light guide plate and the film for an LED lighting apparatus, and hence there can be obtained an LED lighting apparatus excellent in waveguide efficiency of light irrespective of the condition of the surface of the film for an LED lighting apparatus on the opposite side to the light guide plate. Specifically, the LED lighting apparatus is not reduced in waveguide efficiency of light even when fouling adheres to the outer side of the light guide unit (substantially the outer side of the film for an LED lighting apparatus). In addition, the LED lighting apparatus is not reduced in waveguide efficiency of light even when any appropriate film, such as a design film, is further arranged on the outer side of the light guide unit. Further, the waveguide efficiency of light is not reduced even when the outer side of the light guide unit is subjected to surface treatment, such as antifouling treatment.

### A-2. Low-refractive Index Layer

As described above, the low-refractive index layer has a refractive index of 1.25 or less. When a film for an LED lighting apparatus including a low-refractive index layer having such refractive index is laminated on the light guide plate, there can be obtained an LED lighting apparatus capable of satisfactorily reflecting light at the interface between the light guide plate and the film for an LED lighting apparatus, thereby being excellent in waveguide efficiency of light and excellent in intensity of emission from the emission end surface. The refractive index of the low-refractive index layer is preferably 1.23 or less, more preferably 1.20 or less, still more preferably 1.18 or less, particularly preferably 1.15 or less. The refractive index of the low-refractive index layer is preferably as low as possible, but the lower limit thereof is, for example, 1.07 or more (preferably 1.05 or more) . As used herein, the term "refractive index" refers to a refractive index measured at a wavelength of 550 nm.

The thickness of the low-refractive index layer is preferably from 0.01 µm to 1,000 µm, more preferably from 0.05 µm to 100 µm, still more preferably from 0.1 µm to 80 µm, particularly preferably from 0.3 µm to 50 µm.

The low-refractive index layer may have any appropriate form as long as its refractive index falls within the above-mentioned ranges. According to the claimed invention, the low-refractive index layer is configured to be a void-containing layer having predetermined voids.

The void ratio of the low-refractive index layer having voids is preferably 35 vol% or more, more preferably 38 vol% or more, particularly preferably 40 vol% or more. When the void ratio falls within such ranges, a low-refractive index layer having a particularly low refractive index can be formed. The upper limit of the void ratio of the low-refractive index layer is, for example, 90 vol% or less, preferably 75 vol% or less. When the void ratio falls within such ranges, a low-refractive index layer excellent in strength can be formed. When the layer to be subjected to the measurement of the void ratio is merely a single layer containing voids, a ratio (volume ratio) between a material forming the layer and air may be calculated by a conventional method (involving, for example, measuring the weight and volume of the layer and calculating the density thereof), and hence the void ratio (vol%) may be thus calculated. In addition, the refractive index and the void ratio correlate with each other, and hence, for example, the void ratio may also be calculated from the value of the refractive index as a layer. Specifically, for example, the void ratio is calculated by Lorentz-Lorenz' s formula from the value of the refractive index measured with an ellipsometer.

The size of each of the voids is preferably from 2 nm to 500 nm, more preferably from 5 nm to 500 nm, still more preferably from 10 nm to 200 nm, particularly preferably from 20 nm to 100 nm. The size of each of the voids may be measured by a BET test method. Specifically, the void size may be evaluated from a pore distribution obtained by: loading 0.1 g of a low-refractive index layer sample into a capillary of a specific surface area measurement apparatus (product name: "ASAP2020", manufactured by Micromeritics Instrument Corporation); then removing gas in its void structure through drying under reduced pressure at room temperature for 24 hours; and then adsorbing a nitrogen gas onto the low-refractive index layer sample.

The peak pore diameter of the low-refractive index layer having voids is preferably from 5 nm to 50 nm, more preferably from 10 nm to 40 nm, still more preferably from 20 nm to 30 nm. The peak pore diameter is determined from a BJH plot and a BET plot, and an isothermal adsorption curve, each of which is based on nitrogen adsorption, through use of a pore distribution/specific surface area measurement apparatus (product name: "BELLSORP MINI", from MicrotracBEL Corp.).

The low-refractive index layer having voids contains, for example, approximately spherical particles, such as silicone particles, silicone particles having fine pores, or silica hollow nanoparticles, fibrous particles, such as a cellulose nanofiber, an alumina nanofiber, or a silica nanofiber, or flat plate-like particles, such as nanoclay formed of bentonite. According to the claimed invention, the low-refractive index layer having voids is a porous body formed by chemical bonding between particles. In addition, at least some of the particles forming the low-refractive index layer having voids may be bonded to each other via a small amount of a binder component (e.g., a binder component having a weight equal to or smaller than that of the particles) . The void ratio and refractive index of the low-refractive index layer having voids may be adjusted on the basis of, for example, the particle diameters and particle diameter distribution of the particles forming the low-refractive index layer.

As a method of obtaining the low-refractive index layer having voids, there are given, for example, methods described in JP 2010-189212 A, JP 2008-040171 A, JP 2006-011175 A, WO 2004/113966 A1, and references thereof. Specific examples thereof include: a method involving hydrolyzing and polycondensing at least one of a silica-based compound, or a hydrolyzable silane, or a partial hydrolysate or dehydration condensate thereof; a method involving using porous particles and/or hollow fine particles; a method involving utilizing a spring-back phenomenon to produce an aerogel layer; andamethodinvolvingusingapulverizedgel, whichisobtained by pulverizing a gel obtained by a sol-gel method and chemically bonding fine porous particles in the pulverized liquid to each other with a catalyst or the like. However, the low-refractive index layer may be produced by any production method, which is not limited to the above-mentioned production methods.

The low-refractive index layer having voids is preferably a silicone porous body. The silicone porous body may be formed of fine porous particles of a silicon compound that are bonded to each other. An example of the fine porous particles of a silicon compound is a pulverized product of a gelled silicon compound. The silicone porous body may be formed by, for example, applying an application liquid containing the pulverized product of a gelled silicon compound to a base material. In one embodiment, the pulverized product of a gelled silicon compound may be subjected to, for example, the action of a catalyst, light irradiation, or heating, to form a chemical bond (e.g., a siloxane bond).

An example of the silicon compound is a compound represented by the following formula (1).

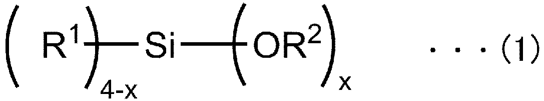

In the formula (1), X represents 2, 3, or 4. R¹ represents preferably a linear or branched alkyl group having 1 to 6 carbon atoms, more preferably a linear or branched alkyl group having 1 to 4 carbon atoms, still more preferably an alkyl group having 1 or 2 carbon atoms. R² represents preferably a hydrogen atom or a linear or branched alkyl group having 1 to 6 carbon atoms, more preferably a hydrogen atom or a linear or branched alkyl group having 1 to 4 carbon atoms, still more preferably a hydrogen atom or an alkyl group having 1 or 2 carbon atoms.

Specific examples of the silicon compound include tris(hydroxy)methylsilane and trimethoxy(methyl)silane.

In one embodiment, the silicon compound is a trifunctional silane. When the trifunctional silane is used, a low-refractive index layer having a particularly low refractive index can be formed. In another embodiment, the silicon compound is a tetrafunctional silane. When the tetrafunctional silane is used, a low-refractive index layer excellent in scratch resistance can be formed.

The gelation of the silicon compound may be performed by, for example, a dehydration condensation reaction of the silicon compound. Any appropriate method may be adopted as a method for the dehydration condensation reaction.

Any appropriate method may be adopted as a pulverization method for the gelled silicon compound. An example of the pulverization method is a method involving using a pulverization apparatus making use of a cavitation phenomenon, such as an ultrasonic homogenizer or a high-speed rotating homogenizer.

The volume-average particle diameter of the fine porous particles of a silicon compound (pulverized product of a gelled silicon compound) is preferably from 0.1 µm to 2 µm, more preferably from 0.2 µm to 1.5 µm, still more preferably from 0.4 µm to 1 µm. The volume-average particle diameter may be measured by a dynamic light scattering method.

With regard to the particle size distribution of the fine porous particles of a silicon compound (pulverized product of a gelled silicon compound), the ratio of particles each having a particle diameter of from 0.4 µm to 1 µm to all particles is preferably from 50 wt% to 99.9 wt%, more preferably from 80 wt% to 99.8 wt%, still more preferably from 90 wt% to 99.7 wt%. In addition, the ratio of particles each having a particle diameter of from 1 µm to 2 µm to all particles is preferably from 0.1 wt% to 50 wt%, more preferably from 0.2 wt% to 20 wt%, still more preferably from 0.3 wt% to 10 wt%. The particle size distribution may be measured with a particle size distribution evaluation apparatus.

### A-3. Base Material

The base material may be formed of any appropriate material. As a material for forming the base material, there are given, for example: thermoplastic resins, such as a polyethylene terephthalate-based resin, an acrylic resin, a cellulose-based resin, a cycloolefin-based resin, and an olefin-based resin; thermosetting resins; inorganic materials, such as glass and silicon; and carbon fiber materials.

The thickness of the base material is not particularly limited, and may be set to any appropriate thickness depending on applications. The thickness of the base material is, for example, from 1 µm to 1,000 µm.

### A-4. Adhesion Layer

The adhesion layer contains any appropriate pressure-sensitive adhesive or adhesive. The pressure-sensitive adhesive and the adhesive each preferably have transparency and optical isotropy. Specific examples of the pressure-sensitive adhesive include a rubber-based pressure-sensitive adhesive, an acrylic pressure-sensitive adhesive, a silicone-based pressure-sensitive adhesive, an epoxy-based pressure-sensitive adhesive, and a cellulose-based pressure-sensitive adhesive. Of those, a rubber-based pressure-sensitive adhesive or an acrylic pressure-sensitive adhesive is preferred. Specific examples of the adhesive include a rubber-based adhesive, an acrylic adhesive, a silicone-based adhesive, an epoxy-based adhesive, and a cellulose-based adhesive. In addition, a pressure-sensitive adhesive or adhesive formed of, for example, a water-soluble cross-linking agent for a vinyl alcohol-based polymer, such as glutaraldehyde, melamine, or oxalic acid, may be used.

The thickness of the adhesion layer is preferably from 0.1 µm to 100 µm, more preferably from 5 µm to 50 µm, still more preferably from 10 µm to 30 µm.

The refractive index of the adhesion layer is preferably from 1.42 to 1.60, more preferably from 1.47 to 1.58. When the refractive index falls within such ranges, there can be obtained an LED lighting apparatus excellent in waveguide efficiency of light and excellent in intensity of emission from the emission end surface.

### A-5. Production Method for Film for LED Lighting Apparatus

The film for an LED lighting apparatus may be produced by any appropriate method. For example, the film for an LED lighting apparatus including the base material and the low-refractive index layer may be obtained by applying an application liquid containing predetermined particles (e.g., the fine porous particles of a silicon compound, preferably the pulverized product of a gelled silicon compound) onto the base material, followed by drying.

The application liquid contains any appropriate solvent. Examples of the solvent include isopropyl alcohol, ethanol, methanol, n-butanol, 2-butanol, isobutyl alcohol, and pentanol.

In one embodiment, the application liquid further contains a catalyst. A catalyst capable of promoting the chemical bonding of the particles is used as the catalyst. For example, when the fine porous particles of a silicon compound are used as the particles, a catalyst capable of promoting a dehydration condensation reaction of silanol groups of the silicon compound is used. Examples of the catalyst include: base catalysts, such as potassium hydroxide, sodium hydroxide, and ammonium hydroxide; and acid catalysts, such as hydrochloric acid, acetic acid, and oxalic acid. Of those, a base catalyst is preferred. The content ratio of the catalyst is preferably from 0.01 part by weight to 20 parts by weight, more preferably from 0.1 part by weight to 5 parts by weight with respect to 100 parts by weight of the particles in the application liquid.

Any appropriate method may be adopted as an application method for the application liquid. Examples of the application method include bar coater coating, air knife coating, gravure coating, gravure reverse coating, reverse roll coating, lip coating, die coating, and dip coating.

Any appropriate method may be adopted as a drying method for the application liquid. The drying method for the application liquid may be natural drying, drying by heating, or drying under reduced pressure. As heating means, there are given, for example, a hot air fan, a heating roll, and a far-infrared heater.

The production method for the film for an LED lighting apparatus may include a heating step. The heating step can promote bonding between the particles forming the low-refractive index layer. For example, when the fine porous particles of a silicon compound are used as the particles, a heating temperature is preferably 200°C or more. The drying step may double as the heating step.

The details of a production method for a film including a low-refractive index layer are described in, for example, JP 2017-47677 A.

### B. LED Lighting Apparatus

An LED lighting apparatus of the present invention includes a light guide plate and a low-refractive index layer arranged on at least one surface of the light guide plate. According to the claimed invention, the film for an LED lighting apparatus is laminated on the light guide plate to provide an LED lighting apparatus including a low-refractive index layer. In this embodiment, as illustrated in FIG. **2****,** the LED lighting apparatus **200** includes: the light guide unit **100** including the light guide plate **120** and the film **110** for an LED lighting apparatus, which is arranged on at least one surface (both surfaces in the illustrated example) of the light guide plate **120;** and the LED light source **40** arranged on one end surface (surface approximately perpendicular to the film **110** for an LED lighting apparatus) of the light guide plate **120.** The film **100** for an LED lighting apparatus is preferably directly arranged on the light guide plate in such a manner that the low-refractive index layer **20** is arranged inside (light guide plate side) with respect to the base material **10.** The term "directly arranged" means that the film **100** for an LED lighting apparatus and the light guide plate **120** are arranged without any other layer arranged between the film **100** for an LED lighting apparatus and the light guide plate **120.** The LED lighting apparatus may further include any appropriate other member. For example, a member for diffusing emitted light, such as a light-diffusing plate, may be arranged on the emission end surface.

Any appropriate material may be used as a material for forming the light guide plate as long as light radiated from the LED light source can be efficiently guided. Examples of the material for forming the light guide plate include an acrylic resin, a polycarbonate-based resin, and a cycloolefin-based resin. The thickness of the light guide plate is, for example, from 100 µm to 1,000 µm. The shape of the emission end surface of the light guide plate is not particularly limited, and may be, other than the illustrated example, an inclined surface inclined with respect to the film for an LED lighting apparatus, or an uneven surface.

The refractive index of the light guide plate is preferably 1.4 or more, more preferably more than 1.45, still more preferably more than 1.45 and 2 or less, particularly preferably from 1.48 to 1.8.

A difference between the refractive index of the light guide plate and the refractive index of the low-refractive index layer is preferably 0.2 or more, more preferably 0.23 or more, still more preferably 0.25 or more. When the difference falls within such ranges, there can be obtained an LED lighting apparatus capable of satisfactorily reflecting light at the interface between the light guide plate and the film for an LED lighting apparatus, thereby being excellent in waveguide efficiency of light and excellent in intensity of emission from the emission end surface. In general, the refractive index of the light guide plate is higher than the refractive index of the low-refractive index layer.

### Examples

Now, the film used in the present invention is specifically described by way of Examples. Evaluation methods in Examples and Comparative Examples are as described below. In addition, the terms "part(s)" and "%" are by weight unless otherwise stated.

### <Evaluation Methods>

### (1) Refractive Index

A refractive index layer was cut into a size of 50 mm×50 mm, and the resultant was bonded to the front surface of a glass plate (thickness: 3mm) via apressure-sensitive adhesion layer. A central portion (diameter: about 20 mm) of the back surface of the glass plate was painted over with a black felt-tip pen to provide a sample prevented from reflection at the back surface of the glass plate. The sample was set in an ellipsometer (manufactured by J.A. Woollam Japan: VASE), and its refractive index was measured under the conditions of a wavelength of 500 nm and an incident angle of from 50° to 80°.

### (2) Void Ratio

A void ratio was calculated by Lorentz-Lorenz' s formula from the value of the refractive index measured with the ellipsometer.

### (3) Ratio of Intensity of Light Emitted from Light Guide Plate to Intensity of Light Entering Light Guide Plate

A spectroradiometer SR-UL2 (manufactured by Topcon Technohouse Corporation) was used to determine a ratio between the brightness measurement result of an LED alone before the entrance of light into a light guide plate (entering light intensity) and the brightness measurement result of light emitted from the terminal end of the light guide plate after the entrance of light from the LED into the light guide plate (emitted light brightness).

### [Production Example 1] Preparation of Application Liquid for Forming Low-refractive Index Layer

### (1) Gelation of Silicon Compound

0.95 g of MTMS serving as a precursor of a silicon compound was dissolved in 2.2 g of DMSO to prepare a mixed liquid A. To the mixed liquid A, 0.5 g of a 0.01 mol/L oxalic acid aqueous solution was added, and the mixture was stirred at room temperature for 30 minutes to hydrolyze MTMS. Thus, a mixed liquid B containing tris(hydroxy)methylsilane was produced.

0.38 g of 28 wt% ammonia water and 0.2 g of pure water were added to 5.5 g of DMSO, and then the mixed liquid B was further added. The mixture was stirred at room temperature for 15 minutes to perform gelation of tris(hydroxy)methylsilane. Thus, a mixed liquid C containing a gelled silicon compound was obtained.

### (2) Maturation Treatment

The mixed liquid C containing the gelled silicon compound prepared as described above was subjected as it was to maturation treatment by being incubated at 40°C for 20 hours.

### (3) Pulverization Treatment

Next, the gelled silicon compound subjected to maturation treatment as described above was crushed using a spatula into granules each having a size of from several mm to several cm. Then, 40 g of IBA was added to the mixed liquid C, and the whole was lightly stirred and then left to stand still at room temperature for 6 hours to decant the solvent and the catalyst in the gel. Similar decantation treatment was performed three times to perform solvent replacement, to thereby provide a mixed liquid D. Then, the gelled silicon compound in the mixed liquid D was subjected to pulverization treatment (high-pressure media-less pulverization). The pulverization treatment (high-pressure media-less pulverization) was performed by weighing 1.85 g of the gelled compound in the mixed liquid D' and 1.15 g of IBA into a 5 cc screw-capped vial and then pulverizing the contents under the conditions of 50 W and 20 kHz for 2 minutes through use of a homogenizer (manufactured by SMT Co., Ltd., product name: "UH-50").

As a result of the pulverization treatment, the gelled silicon compound in the mixed liquid D was pulverized, and thus the mixed liquid D' became a sol liquid of a pulverized product. A volume-average particle diameter indicating a variation in particle size of the pulverized product contained in the mixed liquid D' was found to be from 0.50 to 0.70 with a dynamic light scattering Nanotrac particle size analyzer (manufactured by Nikkiso Co., Ltd., model UPA-EX150). Further, to 0.75 g of the sol liquid (mixed liquid C'), a solution of a photobase generator (Wako Pure Chemical Industries, Ltd.: product name: WPBG-266) in methyl ethyl ketone (MEK) at a concentration of 1.5 wt% and a solution of bis(trimethoxysilyl)ethane in MEK at a concentration of 5% were added at a ratio of 0.062 g:0.036 g to provide an application liquid for a low-refractive index layer.

### [Production Example 2] Production of Pressure-sensitive Adhesion Layer

A four-necked flaskwith a stirring blade, a temperature gauge, a nitrogen gas inlet tube, and a condenser was loaded with 90.7 parts of butyl acrylate, 6 parts of N-acryloylmorpholine, 3 parts of acrylic acid, 0.3 part of 2-hydroxybutyl acrylate, and 0.1 part by weight of 2,2'-azobisisobutyronitrile serving asa polymerization initiator together with 100 g of ethyl acetate. While the contents were gently stirred, a nitrogen gas was introduced to performnitrogen purge. After that, with the liquid temperature in the flask being kept around 55°C, a polymerization reaction was performed for 8 hours to prepare an acrylic polymer solution. With respect to 100 parts of the solid content of the resultant acrylic polymer solution, 0.2 part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of γ-glycidoxypropylmethoxysilane (manufactured by Shin-Etsu Chemical Co., Ltd.: KBM-403) were blended to prepare an acrylic pressure-sensitive adhesive solution. Then, the acrylic pressure-sensitive adhesive solution was applied to one surface of a silicone-treated polyethylene terephthalate (PET) film (manufactured by Mitsubishi Polyester Film Corporation, thickness: 38 µm) so that a pressure-sensitive adhesive layer after drying had a thickness of 10 µm, and the applied solution was dried at 150°C for 3 minutes to form the pressure-sensitive adhesive layer.

### [Example 1]

The application liquid for a low-refractive index layer prepared in Production Example 1 was applied to an acrylic resin film (thickness: 20 µm) serving as a base material, and was dried to provide a laminate in which a low-refractive index layer (refractive index: 1.18) having a thickness of 850 nm was arranged on one surface of the base material. The low-refractive index layer was subjected to UV (300 mJ) irradiation, and then the pressure-sensitive adhesive layer of Production Example 2 was transferred onto the low-refractive index layer, followed by aging at 60°C for 20 hours, to provide a film for an LED lighting apparatus (base material/low-refractive index layer/pressure-sensitive adhesive layer).

The resultant film for an LED lighting apparatus was directly bonded to each of both surfaces of a light guide plate (acrylic light guide plate, refractive index: 1.49) of a commercially available LED design lighting apparatus including the light guide plate and an LED light source arranged on one end surface of the light guide plate. Further, a black PET film was bonded to the opposite side of the film for an LED lighting apparatus to the light guide plate. Thus, an LED lighting apparatus was obtained. For the resultant LED lighting apparatus, the ratio of the intensity of light emitted from the light guide plate to the intensity of light entering the light guide plate at a time when the LED light source was turned on was evaluated by the evaluation method (3). The result is shown in Table 1.

### [Comparative Example 1]

An LED lighting apparatus was obtained by directly bonding a black PET film to the light guide plate of the same LED design lighting apparatus as the LED design lighting apparatus used in Example 1. For the resultant LED lighting apparatus, the ratio of the intensity of light emitted from the light guide plate to the intensity of light entering the light guide plate at a time when the LED light source was turned on was evaluated by the evaluation method (3). The result is shown in Table 1.

### [Comparative Example 2]

An LED lighting apparatus was obtained by subjecting the light guide plate of the same LED design lighting apparatus as the LED design lighting apparatus used in Example 1 to antifouling treatment with a fluorine-based compound (manufactured by AGC Seimi Chemical Co., Ltd., product name: "SFCOAT") . For the resultant LED lighting apparatus, the ratio of the intensity of light emitted from the light guide plate to the intensity of light entering the light guide plate at a time when the LED light source was turned on was evaluated by the evaluation method (3). The result is shown in Table 1.

**Table 1**

| | Example 1 | Comparative Example 1 | Comparative Example 2 |
|---|---|---|---|
| Configuration | Black PET film/film for LED lighting apparatus/light guide plate | Black PET film/light guide plate | Antifouling-treated layer/light guide plate |
| Void ratio of low-refractive index layer | 59% | - | - |
| Refractive index of low-refractive index layer | 1.18 | - | - |
| Ratio of emitted light intensity to entering light intensity | 92% | <5% | 80% |

As apparent from Table 1, the use of the film for the LED lighting apparatus of the present invention can provide a light guide unit capable of efficiently guiding entering light.

### Reference Signs List

- **10**: base material

- **20**: low-refractive index layer
- **30**: adhesion layer
- **40**: LED light source
- 100: Light guide unit
- **110**: film for LED lighting apparatus
- **120**: light guide plate
- **200**: LED lighting apparatus

## Claims

1. An LED lighting apparatus (200), comprising:
a light guide unit (100) including a light guide plate (120) and a film for an LED lighting apparatus (110), and
an LED light source (40) arranged on one end surface of the light guide plate (120);
wherein the film for an LED lighting apparatus (110) includes:
a base material (10); and
a low-refractive index layer (20) that is arranged on the light guide plate side of the base material (10);
wherein the low-refractive index layer (20) has a refractive index of 1.25 or less, and
the low-refractive index layer (20) is a void-containing layer and a porous body formed by chemical bonding between particles,
wherein a difference between a refractive index of the light guide plate (120) and a refractive index of the low-refractive index layer (20) is 0.2 or more;
**characterized in that** the LED lighting apparatus (200) is configured to emit light from an end surface (122) opposed to the end surface (121) on which the LED light source is arranged; and
that the film for an LED lighting apparatus (110) is arranged on both main surfaces of the light guide plate (120).

2. The LED lighting apparatus according to claim 1, wherein the particles are fine porous particles which are a pulverized product of a gelled silicon compound.

3. An LED lighting apparatus according to any one of claims 1 to 2,
wherein the base material (10) is formed of at least one kind selected from the group consisting of a thermoplastic resin selected from a cellulose-based resin, a cycloolefin-based resin, and an olefin-based resin; thermosetting resins; inorganic materials, such as glass and silicon; and carbon fiber materials.

4. The LED lighting apparatus according to any one of claims 1 to 3, wherein the low-refractive index layer (20) has a void ratio of 35 vol% or more.

5. The LED lighting apparatus according to any one of claims 1 to 4, wherein the surface treatment of the base material (10) is an antifouling treatment.

6. The LED lighting apparatus according to any one of claims 1 to 5, wherein a light-diffusing plate is arranged on the emission end surface (122).

## Patentansprüche

1. LED-Beleuchtungsvorrichtung (200), umfassend:
eine Lichtleiteinheit (100) mit einer Lichtleitplatte (120) und einer Folie für eine LED-Beleuchtungsvorrichtung (110), und
eine LED-Lichtquelle (40), die an einer Endoberfläche der Lichtleitplatte (120) angeordnet ist;
wobei die Folie für eine LED-Beleuchtungsvorrichtung (110) umfasst:
ein Basismaterial (10); und
eine Schicht mit niedrigem Brechungsindex (20), die auf der Lichtleitplattenseite des Basismaterials (10) angeordnet ist;
wobei die Schicht mit niedrigem Brechungsindex (20) einen Brechungsindex von 1,25 oder weniger aufweist, und
die Schicht mit niedrigem Brechungsindex (20) eine hohlraumhaltige Schicht und ein poröser Körper ist, der durch chemische Bindung zwischen Partikeln gebildet ist,
wobei die Differenz zwischen dem Brechungsindex der Lichtleitplatte (120) und dem Brechungsindex der Schicht mit niedrigem Brechungsindex (20) 0,2 oder mehr beträgt;
**dadurch gekennzeichnet, dass** die LED-Beleuchtungsvorrichtung (200) so konfiguriert ist, dass sie Licht von einer Endoberfläche (122) emittiert, die der Endoberfläche (121) gegenüberliegt, auf der die LED-Lichtquelle angeordnet ist; und
dass die Folie für eine LED-Beleuchtungsvorrichtung (110) auf beiden Hauptoberflächen der Lichtleitplatte (120) angeordnet ist.

2. LED-Beleuchtungsvorrichtung gemäß Anspruch 1, wobei die Partikel feine poröse Partikel sind, die ein pulverisiertes Produkt einer gelierten Siliziumverbindung sind.

3. LED-Beleuchtungsvorrichtung gemäß mindestens einem der Ansprüche 1 bis 2,
wobei das Basismaterial (10) aus mindestens einer Art gebildet ist, die ausgewählt ist aus der Gruppe bestehend aus einem thermoplastischen Harz, ausgewählt aus einem Harz auf Cellulosebasis, einem Harz auf Cycloolefinbasis und einem Harz auf Olefinbasis; thermisch härtbaren Harzen; anorganischen Materialien, wie Glas und Silizium; und Kohlenstofffasermaterialien.

4. LED-Beleuchtungsvorrichtung gemäß mindestens einem der Ansprüche 1 bis 3, wobei die Schicht mit niedrigem Brechungsindex (20) einen Hohlraumanteil von 35 Vol.-% oder mehr aufweist.

5. LED-Beleuchtungsvorrichtung gemäß mindestens einem der Ansprüche 1 bis 4, wobei die Oberflächenbehandlung des Basismaterials (10) eine Antifouling-Behandlung ist.

6. LED-Beleuchtungsvorrichtung gemäß mindestens einem der Ansprüche 1 bis 5, wobei eine Lichtstreuungsplatte auf der Emissionsendoberfläche (122) angeordnet ist.

## Revendications

1. Appareil d'éclairage à DEL (200), comprenant :
une unité de guidage de la lumière (100) incluant une plaque de guidage de la lumière (120) et un film pour un appareil d'éclairage à DEL (110), et
une source de lumière DEL (40) disposée sur une surface d'extrémité de la plaque de guidage de la lumière (120) ;
dans lequel le film pour un appareil d'éclairage à DEL (110) inclut :
un matériau de base (10) ; et
une couche à faible indice de réfraction (20) qui est disposée du côté de la plaque de guidage de la lumière du matériau de base (10) ;
dans lequel la couche à faible indice de réfraction (20) présente un indice de réfraction de 1,25 ou moins, et
la couche à faible indice de réfraction (20) est une couche contenant des vides et un corps poreux formé par liaison chimique entre des particules,
dans lequel la différence entre l'indice de réfraction de la plaque de guidage de la lumière (120) et l'indice de réfraction de la couche à faible indice de réfraction (20) est de 0,2 ou plus ;
**caractérisé en ce que** l'appareil d'éclairage à DEL (200) est configuré pour émettre de la lumière à partir d'une surface d'extrémité (122) opposée à la surface d'extrémité (121) sur laquelle la source de lumière DEL est disposée ; et
**en ce que** le film pour un appareil d'éclairage à DEL (110) est disposé sur les deux surfaces principales de la plaque de guidage de la lumière (120).

2. Appareil d'éclairage à DEL selon la revendication 1, dans lequel les particules sont de fines particules poreuses qui sont un produit pulvérisé d'un composé de silicium gélifié.

3. Appareil d'éclairage à DEL selon l'une quelconque des revendications 1 à 2,
dans lequel le matériau de base (10) est constitué d'au moins un type choisi dans le groupe constitué par une résine thermoplastique choisie parmi une résine à base de cellulose, une résine à base de cyclooléfine, et une résine à base d'oléfine ; des résines thermodurcissables ; des matériaux inorganiques, tels que le verre et le silicium ; et des matériaux en fibre de carbone.

4. Appareil d'éclairage à DEL selon l'une quelconque des revendications 1 à 3, dans lequel la couche à faible indice de réfraction (20) présente un taux de vide de 35 % vol. ou plus.

5. Appareil d'éclairage à DEL selon l'une quelconque des revendications 1 à 4, dans lequel le traitement de surface du matériau de base (10) est un traitement antisalissure.

6. Appareil d'éclairage à DEL selon l'une quelconque des revendications 1 à 5, dans lequel une plaque de diffusion de la lumière est disposée sur la surface d'extrémité d'émission (122).
